# EUROPEAN PATENT APPLICATION

(11) **EP 4 400 747 A1**
(43) Date of publication of application: **17.07.2024**
(21) Application number: 22878483.1
(22) Date of filing: 03.10.2022
(51) Int. Cl.: F16J 12/00, F16J 13/12, F17C 13/00, F16B 7/18, F16L 15/04

(54) **ACCUMULATOR FOR HIGH-PRESSURE HYDROGEN GAS**

(30) Priority: 04.10.2021 JP 2021163676
(71) Applicant: JFE Steel Corporation, Tokyo 100-0011 (JP)
(72) Inventor: TAKAGI, Shusaku, Tokyo 100-0011 (JP); OKANO, Hiroshi, Tokyo 100-0011 (JP); ISHIKAWA, Nobuyuki, Tokyo 100-0011 (JP)
(74) Representative: Haseltine Lake Kempner LLP
(86) International application number: PCT/JP2022/037016
(87) International publication number: WO 2023/058614

(57) **Abstract**

Provided is a pressure vessel for high-pressure hydrogen gas capable of large-capacity hydrogen storage with a single pressure vessel while being easy to produce, transport, and install. A pressure vessel for high-pressure hydrogen gas comprises a steel container that is composed of two or more steel pipes or tubes connected by screw threads.

## Description

### TECHNICAL FIELD

The present disclosure relates to a pressure vessel for high-pressure hydrogen gas, and particularly to a pressure vessel for high-pressure hydrogen gas capable of large-capacity hydrogen storage.

### BACKGROUND

Amid the growing movement to reduce CO₂ emissions, the need to utilize hydrogen is increasing. For utilization of hydrogen, a method of safely storing large amounts of hydrogen needs to be developed.

As one method of storing large amounts of hydrogen, storing hydrogen in a liquid state is under consideration. However, since liquid hydrogen needs to be stored at an extremely low temperature of -253 °C or lower, the cost of storage facility and the running cost for maintaining the low temperature are high.

Another method of storing large amounts of hydrogen is to compress and store gaseous hydrogen. Storing hydrogen gas in cylinders at a pressure of about 15 MPa is conventionally performed. In order to further increase the storage capacity, efforts to store hydrogen gas at a high pressure of 40 MPa or more are being made widely at hydrogen stations, etc.

Various materials and structures are proposed for containers (pressure vessels) for holding hydrogen gas at the foregoing high pressure. Such containers can be roughly divided into the following four types:
(1) Type 1 container made entirely of metal
(2) Type 2 container in which the outer periphery (only the cylindrical part) of a metallic liner is hoop-wrapped with fiber-reinforced plastic (FRP)
(3) Type 3 container in which the outer periphery (the whole part including the dome parts) of a metallic liner is full-wrapped with FRP
(4) Type 4 container in which the outer periphery (the whole part including the dome parts) of a non-metallic liner is full-wrapped with FRP.

As a specific example of Type 1 container, JP 2019-044969 A (PTL 1) discloses a container comprising a straight-shaped steel container. As a specific example of Type 2 container, JP 2009-293799 A (PTL 2) discloses a container in which the outer periphery of a Cr-Mo steel liner is coated with FRP. As a specific example of Type 3 container, ENEOS Technical Review, June 2013, Vol. 55, No. 2, p. 69-72 (NPL 1) discloses a container in which the outer periphery of an aluminum liner is coated with FRP. As a specific example of Type 4 container, WO 2016/167034 A1 (PTL 3) discloses a container in which the outer periphery of a resin liner is coated with FRP.

### CITATION LIST

### Patent Literature

PTL 1: JP 2019-044969 A
PTL 2: JP 2009-293799 A
PTL 3: WO 2016/167034 A1

### Non-patent Literature

NPL 1: ENEOS Technical Review, June 2013, Vol. 55, No. 2, p. 69-72
NPL 2: the Japan Society for Heat Treatment (Ed.) "Introduction to the structures and properties of metal materials - heat treatment and structure control to make use of materials", Taiga Publishing, 2004

### SUMMARY

### (Technical Problem)

While various types of pressure vessels are proposed as mentioned above, each of these types of pressure vessels has a length of about several meters and a diameter of several tens of centimeters, with the volume per pressure vessel being limited to about 300 L. Hence, in order to increase the hydrogen gas storage capacity in a hydrogen station or the like, the number of pressure vessels installed needs to be increased. Given that a valve, a support stand, etc. are required for each pressure vessel installed, increasing the number of pressure vessels installed causes an increase in facility cost and is inefficient.

Instead of increasing the number of pressure vessels installed, the outer diameter or length of each pressure vessel may be increased to increase the capacity per pressure vessel. However, a pressure vessel made larger than the current typical size is difficult to produce and also difficult to transport to the installation site due to its size and weight. For example, in order to transport the pressure vessel from the production site to the installation site, an extensive operation such as performing transportation at night using a special transport vehicle while restricting the passage of other vehicles is required. Moreover, if the space of the installation site is limited, it is necessary to produce pressure vessels of various sizes to fit in the installation site, causing inefficiency.

It could therefore be helpful to provide a pressure vessel for high-pressure hydrogen gas capable of large-capacity hydrogen storage with a single pressure vessel while being easy to produce, transport, and install.

### (Solution to Problem)

We thus provide the following.
1. A pressure vessel for high-pressure hydrogen gas, comprising a steel container that is composed of two or more steel pipes or tubes connected by screw threads.
2. The pressure vessel for high-pressure hydrogen gas according to 1., wherein the connection by the screw threads is made using a coupling provided on an inner side of the steel pipes or tubes.
3. The pressure vessel for high-pressure hydrogen gas according to 1., wherein the connection by the screw threads is made using a coupling provided on an outer side of the steel pipes or tubes.
4. The pressure vessel for high-pressure hydrogen gas according to any one of 1. to 3., wherein a sealing member is provided at a connecting portion between the two or more steel pipes or tubes.
5. The pressure vessel for high-pressure hydrogen gas according to any one of 1. to 4., wherein the steel pipes or tubes have a chemical composition containing (consisting of), in mass%, C: 0.005 % to 0.60 %, Si: 0.001 % to 2.0 %, Mn: 0.01 % to 5.0 %, P: 0.0001 % to 0.060 %, S: 0.00001 % to 0.010 %, N: 0.00001 % to 0.010 %, Al: 0.0001 % to 1.00 %, O: 0.010 % or less, and H: 0 % to 0.0010 %, with a balance consisting of Fe and inevitable impurities.
6. The pressure vessel for high-pressure hydrogen gas according to 5., wherein the chemical composition further contains, in mass%, at least one selected from the group consisting of Mo: 0.0001 % to 5.0 %, Cr: 0.0001 % to 5.0 %, Ni: 0.0001 % to 5.0 %, Cu: 0.0001 % to 5.0 %, Co: 0.0001 % to 5.0 %, B: 0.0001 % to 0.01 %, V: 0.0001 % to 1.0 %, W: 0.0001 % to 5.0 %, Nb: 0.0001 % to 0.1 %, Ti: 0.0001 % to 0.1 %, Zr: 0.0001 % to 0.2 %, Hf: 0.0001 % to 0.2 %, Ta: 0.0001 % to 0.2 %, Sb: 0.0001 % to 0.2 %, Sn: 0.0001 % to 0.2 %, Ca: 0.0001 % to 0.01 %, Mg: 0.0001 % to 0.01 %, and REM: 0.0001 % to 0.5 %.
7. The pressure vessel for high-pressure hydrogen gas according to 5. or 6., wherein the steel pipes or tubes have a microstructure in which an area fraction of retained austenite is 0 % to 3 % and a number density of inclusions with an aspect ratio of 2.0 or more and a major axis length of 10 µm or more is 10 or less per 100 mm².

### (Advantageous Effect)

In the pressure vessel for high-pressure hydrogen gas according to the present disclosure, a plurality of steel pipes or tubes are connected by screw threads to form a steel container. It is therefore possible to perform production and transportation with each steel pipe or tube, which is smaller than the overall size of the pressure vessel, as a unit, and connect the steel pipes or tubes to complete the product at the installation site. The pressure vessel for high-pressure hydrogen gas according to the present disclosure thus has excellent productivity and transportability. Moreover, since the capacity of the pressure vessel can be freely changed by changing the number of steel pipes or tubes connected, an optimal hydrogen storage capacity can be easily achieved depending on the installation site. The pressure vessel for high-pressure hydrogen gas according to the present disclosure is therefore suitable for use at not only hydrogen stations but also various sites where hydrogen storage is required, such as offshore wind farms, mountain areas, ships, and ports and harbors.

### BRIEF DESCRIPTION OF THE DRAWINGS

In the accompanying drawings:
FIG. 1 is a schematic sectional view illustrating the structure of a connecting portion of a pressure vessel for high-pressure hydrogen gas in Embodiment 1 of the present disclosure;
FIG. 2 is a schematic sectional view illustrating the structure of a connecting portion of a pressure vessel for high-pressure hydrogen gas in Embodiment 2 of the present disclosure;
FIG. 3 is a schematic sectional view illustrating an example of the structure in the case where O-rings are used in Embodiment 2;
FIG. 4 is a schematic sectional view illustrating the structure of a connecting portion of a pressure vessel for high-pressure hydrogen gas in Embodiment 3 of the present disclosure;
FIG. 5 is a schematic sectional view illustrating an example of the structure in the case where O-rings are used in Embodiment 3;
FIG. 6 is a schematic sectional view illustrating the structure of a connecting portion of a pressure vessel for high-pressure hydrogen gas in Embodiment 4 of the present disclosure;
FIG. 7 is a schematic sectional view illustrating an example of the structure in the case where leak ports are provided in Embodiment 4 of the present disclosure; and
FIG. 8 is a schematic sectional view illustrating the structure of the pressure vessel for high-pressure hydrogen gas in Embodiment 1 of the present disclosure.

### DETAILED DESCRIPTION

A method for carrying out the presently disclosed techniques will be described in detail below. The following description shows a preferred embodiment of the present disclosure, and the present disclosure is not limited to such.

### [Pressure vessel for high-pressure hydrogen gas]

A pressure vessel according to the present disclosure is a pressure vessel for high-pressure hydrogen gas, and comprises a steel container. The pressure vessel for high-pressure hydrogen gas can be used, for example, as a pressure vessel for a hydrogen station. The pressure vessel for high-pressure hydrogen gas is not limited to such, and may be used for any purpose.

The pressure vessel for high-pressure hydrogen gas according to the present disclosure may be composed of only the steel container, or may have a carbon fiber reinforced resin (CFRP) layer (described later) on at least part of the surface of the steel container.

### [Steel container]

In the present disclosure, it is important that the steel container is composed of two or more steel pipes or tubes connected by screw threads. The steel container therefore does not have a weld at the joint (connecting portion) between the steel pipes or tubes. The main effects of this structure will be described below.

First, the pressure vessel for high-pressure hydrogen gas according to the present disclosure can be produced and transported in a state of being divided into a plurality of steel pipes or tubes, and assembled to a certain size at the installation site. Accordingly, even a large-capacity pressure vessel can be produced and transported easily. Moreover, a pressure vessel with a desired capacity can be obtained simply by changing the number of steel pipes or tubes connected.

A method typically used to connect a plurality of steel pipes or tubes is welding. In the case where steel pipes or tubes are joined by welding, the microstructure of the joint is a weld microstructure. The weld microstructure is a microstructure changed as a result of being affected by heat during welding, and is lower in toughness than the base metal. Besides, in the case of performing welding at the installation site, it is difficult to precisely control welding conditions, making it difficult to ensure welding quality. Thus, a pressure vessel formed by welding steel pipes or tubes may, when filled with high-pressure hydrogen gas, fracture at the connecting portion between the steel pipes or tubes.

In the present disclosure, on the other hand, steel pipes or tubes are connected by screw threads (screwing), so that a pressure vessel can be assembled easily with there being no need to perform welding on site. Such a pressure vessel also has higher strength than in the case where steel pipes or tubes are joined by welding. A method of connecting steel pipes or tubes by screw threads will be described later.

The material of the steel pipes or tubes is not limited and may be any steel, but steel pipes or tubes made of low-alloy steel are preferable from the viewpoint of cost reduction.

In one embodiment of the present disclosure, it is preferable to use steel pipes or tubes having a chemical composition containing, in mass%,
C: 0.005 % to 0.60 %,
Si: 0.001 % to 2.0 %,
Mn: 0.01 % to 5.0 %,
P: 0.0001 % to 0.060 %,
S: 0.00001 % to 0.010 %,
N: 0.00001 % to 0.010 %,
Al: 0.0001 % to 1.00 %,
O: 0.010 % or less, and
H: 0 % to 0.0010 %,
with the balance consisting of Fe and inevitable impurities.

H is an element that may be contained in steel depending on production conditions and the like. From the viewpoint of further improving fracture toughness, the H content is preferably low. Specifically, the H content is preferably 0.0010 % or less. Since a lower H content is better, the lower limit of the H content may be 0 %.

The chemical composition may further contain, in mass%, at least one selected from the group consisting of
Mo: 0.0001 % to 5.0 %,
Cr: 0.0001 % to 5.0 %,
Ni: 0.0001 % to 5.0 %,
Cu: 0.0001 % to 5.0 %,
Co: 0.0001 % to 5.0 %,
B: 0.0001 % to 0.01 %,
V: 0.0001 % to 1.0 %,
W: 0.0001 % to 5.0 %,
Nb: 0.0001 % to 0.1 %,
Ti: 0.0001 % to 0.1 %,
Zr: 0.0001 % to 0.2 %,
Hf: 0.0001 % to 0.2 %,
Ta: 0.0001 % to 0.2 %,
Sb: 0.0001 % to 0.2 %,
Sn: 0.0001 % to 0.2 %,
Ca: 0.0001 % to 0.01 %,
Mg: 0.0001 % to 0.01 %, and
REM: 0.0001 % to 0.5 %.

The two or more steel pipes or tubes may have the same chemical composition or different chemical compositions. From the viewpoint of preventing corrosion caused by the potential difference between the steel pipes or tubes, it is preferable that all steel pipes or tubes forming the steel container have the same chemical composition.

The microstructure of the steel pipes or tubes is not limited, and steel pipes or tubes having any microstructure may be used. From the viewpoint of reducing the fatigue crack propagation rate and improving hydrogen gas resistance, it is preferable to use steel pipes or tubes having a microstructure in which the area fraction of retained austenite is 0 % to 3 % and the number density of inclusions with an aspect ratio of 2.0 or more and a major axis length of 10 µm or more is 10 or less per 100 mm². No lower limit is placed on the number density, and the number density may be 0 per 100 mm².

The "microstructure" as used herein refers to the microstructure at a position of the longitudinal center and 1/4 of the wall thickness on the inner side of the steel pipe or tube. That is, the area fraction of each microstructure is the area fraction of the microstructure at a position of the longitudinal center and 1/4 of the wall thickness on the inner side of the steel pipe or tube. Likewise, the number density of the inclusions is the number density at a position of the longitudinal center and 1/4 of the wall thickness on the inner side of the steel pipe or tube.

The area fraction of retained austenite can be measured by X-ray diffraction. In detail, a test piece is collected from a position of the longitudinal center and 1/4 of the wall thickness on the inner side of the steel pipe or tube and the cut surface of the test piece is chemically polished, and then the measurement is performed. In the measurement, a Co-Kα ray source is used for incident X-rays, and the area fraction of retained austenite is calculated from the intensity ratio of (200), (211), and (220) planes of ferrite and (200), (220), and (311) planes of austenite.

The number density of the inclusions can be determined through observation using an optical microscope. First, a test piece for inclusion measurement is collected from a position of the longitudinal center and 1/4 of the wall thickness on the inner side of the steel pipe or tube. The dimensions of the test piece are 20 mm in the longitudinal direction, 5 mm in the width direction, and 15 mm in the thickness direction. The test piece is then embedded in a resin so that a plane (L section) defined by the longitudinal direction and the thickness direction with respect to the rolling direction of the steel pipe or tube will be the observation plane, and the surface is mirror-polished. The mirror-polished surface is observed with an optical microscope, and the number of inclusions with an aspect ratio of 2.0 or more and a length of 10 µm or more in a 10 mm × 10 mm region is measured. The measured number of inclusions is divided by the area (100 mm²) of the region to calculate the number density.

Here, ten test pieces for inclusion measurement are collected for each steel pipe or tube to be measured, and the arithmetic mean of the number densities of the ten test pieces is taken to be the number density of the inclusions of the steel pipe or tube. The aspect ratio and major axis length of the inclusions are measured in accordance with JIS G0555: 2020 (Microscopic testing method for the non-metallic inclusions in steel).

From the same viewpoint, it is preferable that the total area fraction of martensite and bainite in the microstructure of the steel pipe or tube is 80 % or more, and it is more preferable that the area fraction of martensite is 80 % or more. No upper limit is placed on the total area fraction of martensite and bainite, and the total area fraction of martensite and bainite may be 100 %. No upper limit is placed on the area fraction of martensite, and the area fraction of martensite may be 100 %. The area fraction of ferrite is preferably 5 % or less. No lower limit is placed on the area fraction of ferrite, and the area fraction of ferrite may be 0 %. In this specification, martensite is defined to include tempered martensite.

The respective area fractions of martensite, bainite, and ferrite can be determined by taking a micrograph through microscopic observation and performing image analysis on the micrograph. The microscopic observation may be performed using any of an optical microscope and a scanning electron microscope, with an appropriate magnification of 100 to 5000 times. A test piece used for the microscopic observation is collected so that a position of the longitudinal center and 1/4 of the wall thickness on the inner side of the steel pipe or tube will be the observation position. The cross section of the collected test piece is etched using a 3 vol% nital solution to reveal the microstructure, which is then subjected to the microscopic observation. Each microstructure in the micrograph can be identified, for example, by comparing microstructure in each part of the micrograph with the micrographs included in the Japan Society for Heat Treatment (Ed.) "Introduction to the structures and properties of metal materials - heat treatment and structure control to make use of materials", Taiga Publishing, 2004 (NPL 2).

The two or more steel pipes or tubes may have the same microstructure or different microstructures, but preferably have the same microstructure.

When storing hydrogen in a pressure vessel, it is necessary to consider risk of hydrogen embrittlement of the material. From the viewpoint of preventing hydrogen embrittlement, the tensile strength (TS) of each of the two or more steel pipes or tubes is preferably 1100 MPa or less, and more preferably 950 MPa or less. Although no lower limit is placed on the tensile strength, if the tensile strength is low, the wall thickness of the steel pipes or tubes needs to be increased in order to ensure the strength required of the pressure vessel, leading to an increase in cost. Accordingly, the tensile strength of each of the two or more steel pipes or tubes is preferably 800 MPa or more.

The steel pipes or tubes are not limited, and may each be a steel pipe or tube produced by any method. Examples of the steel pipe or tube include an electric resistance welded pipe or tube, a spiral steel pipe or tube, a UOE steel pipe or tube, a steel pipe or tube produced by hollowing out a steel material by machining or the like, a steel pipe or tube produced by forging, and a seamless steel pipe or tube produced by rolling a heated steel billet into a steel pipe or tube shape.

While it is essential in the present disclosure that the steel pipes or tubes are connected by screw threads and not by welding, the use of welding to produce each individual steel pipe or tube is permissible. The reasons for this are as follows.

In the case of joining steel pipes or tubes on site, it is difficult to precisely control welding conditions, which is detrimental to welding quality, as mentioned above. Meanwhile, welding when producing steel pipes or tubes is usually performed under strictly controlled conditions in factories such as steelworks, and thus has high welding quality. In addition, post-welding heat treatment and the like are performed to improve the mechanical properties of the weld according to need. Hence, the weld of the steel pipe or tube itself is less likely to cause fracture than the weld formed by welding the steel pipes or tubes on site. It is therefore possible to use steel pipes or tubes produced by welding, such as electric resistance welded pipes or tubes, spiral steel pipes or tubes, or UOE steel pipes or tubes.

From the viewpoint of further reducing the risk of fracture and enabling use at higher pressures, however, it is preferable to use seamless steel pipes or tubes as the steel pipes or tubes. Seamless steel pipes or tubes are particularly suitable because the properties of the base metal are uniform throughout the steel pipe or tube as a result of having no weld, and also because of having superior properties such as toughness to steel pipes or tubes produced by hollowing or forging while being low in cost.

The length of each of the two or more steel pipes or tubes is not limited and may be any length. If each steel pipe or tube is excessively short, however, the number of joints per pressure vessel increases, causing an increase in cost. The length of each of the two or more steel pipes or tubes is therefore preferably 3 m or more, and more preferably 5 m or more. In the case where each steel pipe or tube is long, the number of joints can be reduced, which is likely to lead to a cost reduction. However, if each steel pipe or tube is excessively long, transportation may be difficult. The length of each of the two or more steel pipes or tubes is therefore preferably 100 m or less, and more preferably 12 m or less so as to be transportable by vehicle. The length of each of the two or more steel pipes or tubes is further preferably 6 m or less.

With the pressure vessel for high-pressure hydrogen gas according to the present disclosure, any volume can be secured by connecting an appropriate number of steel pipes or tubes for the space of the installation site with there being no production or transportation constraints, as mentioned above. Accordingly, the number of steel pipes or tubes forming one steel container is not limited, and may be any number greater than or equal to 2. For example, for loading on a tanker or the like, a pressure vessel of several tens to several hundred meters in length can be formed by connecting several tens to one hundred and several tens of steel pipes or tubes. A large number of steel pipes or tubes (over several hundreds) may be connected to form an ultra-large-capacity pressure vessel. Hence, no upper limit is placed on the number of steel pipes or tubes, and the number of steel pipes or tubes may be any number depending on the space of the installation site. For example, in one embodiment of the present disclosure, the number of steel pipes or tubes may be 1000 or less, 500 or less, 200 or less, or 100 or less.

### [Structure of connecting portion]

In the present disclosure, the structure of the portion where the steel pipes or tubes are connected by screw threads (hereafter referred to as "connecting portion") is not limited, and may be any structure capable of connecting the steel pipes or tubes by screw threads. The thread shape is not limited, and may be any shape as long as necessary stress can be supported.

The central axes of the steel pipes or tubes forming the steel container are preferably coaxial. As a result of the central axes of the steel pipes or tubes being coaxial, the steel pipes or tubes can be connected by the thread structure more easily.

Since the steel pipes or tubes are connected by screw threads in the present disclosure, if the central axes of adjacent steel pipes or tubes are greatly misaligned, the thread structure is subjected to stress such as bending and may be damaged. Therefore, the misalignment of the central axes of the steel pipes or tubes forming the steel container is preferably 5 mm or less and more preferably 1 mm or less. Herein, the misalignment of the central axes of the steel pipes or tubes forming the steel container is the maximum misalignment between the central axis of each steel pipe or tube included in the steel container and the central axis of a steel pipe or tube adjacent to the steel pipe or tube.

It is preferable to provide a sealing member at the connecting portion. The provision of the sealing member can further prevent leakage of hydrogen gas. The sealing member can be typically located between two adjacent steel pipes or tubes. In the case of connection using a coupling (described later), the sealing member is preferably located between a steel pipe or tube and a coupling adjacent to the steel pipe or tube. The sealing member is not limited, and any sealing member such as a gasket, packing, or O-ring may be used.

The material of the sealing member is not limited, and any material such as metal or resin may be used. From the viewpoint of improving sealability, it is preferable to use resin, copper, or the like, which can deform when threads are fastened to improve sealability.

From the viewpoint of more reliably preventing leakage, double arrangement of sealing members is more preferable. Herein, the double arrangement means that two sealing members are located between a steel pipe or tube and a member (another steel pipe or tube or a coupling) adjacent to the steel pipe or tube.

In a structure in which steel pipes or tubes are connected by screw threads as in the present disclosure, stress is concentrated in the thread portions. In view of this, the sealing member is preferably located closer to the inside of the steel container than the thread portions. As a result of the sealing member being located closer to the inside of the steel container than the thread portions, the thread portions can be prevented from coming into contact with hydrogen gas. Consequently, hydrogen embrittlement of the thread portions can be suppressed, with it being possible to reduce the risk of fracture of the steel container.

The steel container may be provided with lids at both ends. As the lids, any lids capable of tightly closing the steel container may be used. Although the material of the lids is not limited, typically steel lids are preferably used. The lids are preferably screw-type lids.

Four preferred structures of connecting portions will be described below with reference to the drawings. Although the following embodiments describe the case where the steel pipes or tubes have the same inner diameter and the same outer diameter, the inner diameters and outer diameters of the respective steel pipes or tubes may be the same or different.

### (Embodiment 1)

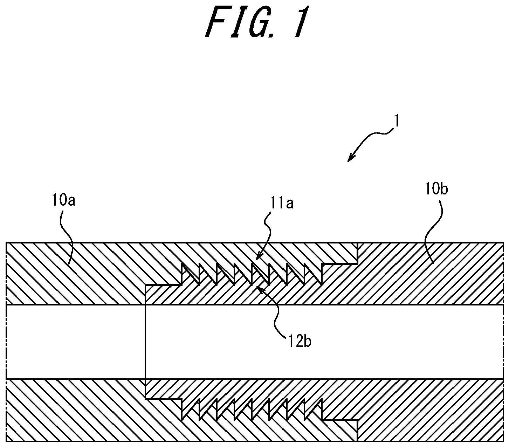

FIG. 1 is a schematic sectional view illustrating the structure of a connecting portion of a pressure vessel 1 for high-pressure hydrogen gas in Embodiment 1 of the present disclosure. A steel container of the pressure vessel for high-pressure hydrogen gas in this embodiment is composed of a plurality of steel pipes or tubes 10, and adjacent steel pipes or tubes are connected by screw threads of the structure illustrated in FIG. 1.

In detail, a female thread portion 11a is formed at one end of a first steel pipe or tube 10a, and a male thread portion 12b that is screwed to the female thread portion 11a of the first steel pipe or tube 10a is formed at one end of a second steel pipe or tube 10b. The female thread portion 11a of the first steel pipe or tube 10a and the male thread portion 12b of the second steel pipe or tube 10b are screwed together to connect the first steel pipe or tube 10a and the second steel pipe or tube 10b.

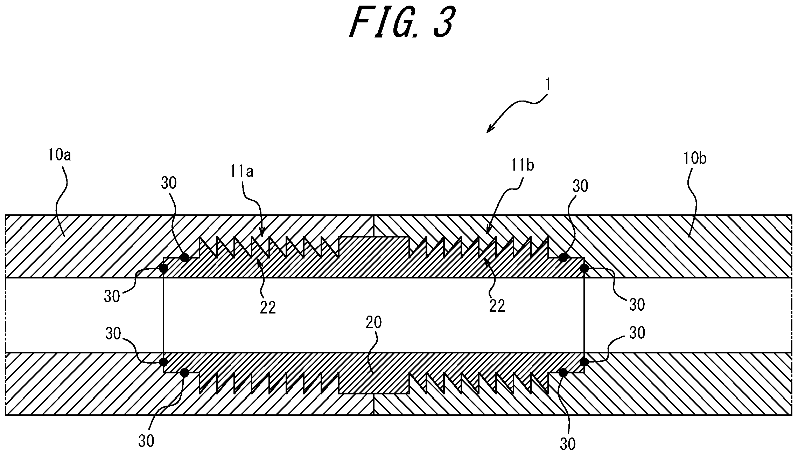

In the case where a sealing portion is provided, the sealing portion is preferably located further to the left of the leftmost thread portion of the female thread portion 11a, that is, located at a position where hydrogen gas can be prevented from reaching the thread portion (see FIG. 3 in Embodiment 2 described later).

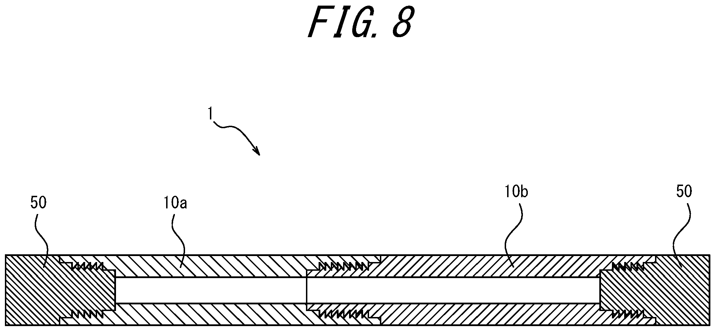

The steel container may be provided with lids at both ends. As the lids, any lids capable of tightly closing the steel container may be used. For example, screw-type lids 50 may be provided at the ends of the steel container as illustrated in FIG. 8. Lids may be equally provided in the below-described other embodiments. Although the steel container illustrated in FIG. 8 is composed of two steel pipes or tubes connected by screw threads, the number of steel pipes or tubes may be any number greater than or equal to 2.

### (Embodiment 2)

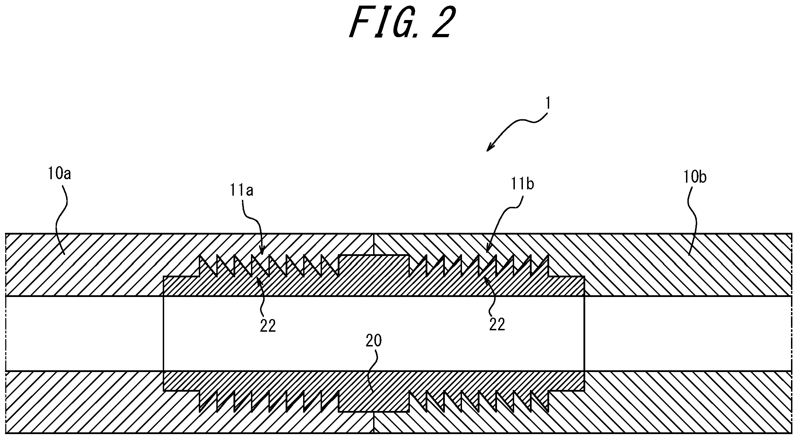

FIG. 2 is a schematic sectional view illustrating the structure of a connecting portion of a pressure vessel 1 for high-pressure hydrogen gas in Embodiment 2 of the present disclosure. A steel container of the pressure vessel for high-pressure hydrogen gas in this embodiment is composed of a plurality of steel pipes or tubes 10, and adjacent steel pipes or tubes are connected using a coupling 20 provided on the inner side of the steel pipes or tubes as illustrated in FIG. 2.

In detail, a female thread portion 11a is formed at one end of a first steel pipe or tube 10a, and a male thread portion 22 that is screwed to the female thread portion 11a of the first steel pipe or tube 10a is formed at one end of the coupling 20. Moreover, a female thread portion 11b is formed at one end of a second steel pipe or tube 10b, and a male thread portion 22 that is screwed to the female thread portion 11b of the second steel pipe or tube 10b is formed at the other end of the coupling 20. The female thread portion 11a of the first steel pipe or tube 10a and the male thread portion 22 at one end of the coupling 20 are screwed together and the female thread portion 11b of the second steel pipe or tube 10b and the male thread portion 22 at the other end of the coupling 20 are screwed together to connect the first steel pipe or tube 10a and the second steel pipe or tube 10b through the coupling 20.

Moreover, it is preferable to provide an O-ring 30 as a sealing member between the coupling 20 and each steel pipe or tube 10 as illustrated in FIG. 3. In particular, double arrangement of O-rings 30 illustrated in FIG. 3 can prevent leakage of hydrogen gas more reliably.

Although the inner diameter of the coupling 20 and the inner diameter of each steel pipe or tube 10 are the same in the example illustrated in FIGS. 2 and 3, the inner diameter of the coupling 20 and the inner diameter of each steel pipe or tube 10 may be different. Although the first steel pipe or tube 10a and the second steel pipe or tube 10b are in contact with each other in the example illustrated in FIGS. 2 and 3, the first steel pipe or tube 10a and the second steel pipe or tube 10b may be apart from each other.

### (Embodiment 3)

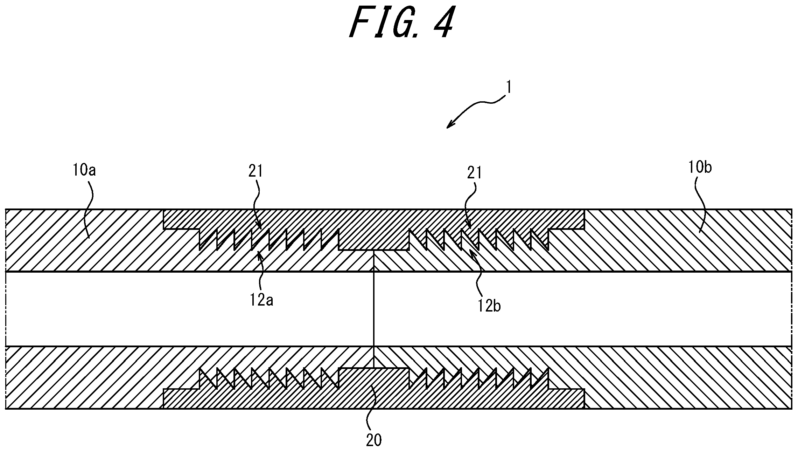

FIG. 4 is a schematic sectional view illustrating the structure of a connecting portion of a pressure vessel 1 for high-pressure hydrogen gas in Embodiment 3 of the present disclosure. A steel container of the pressure vessel for high-pressure hydrogen gas in this embodiment is composed of a plurality of steel pipes or tubes 10, and adjacent steel pipes or tubes are connected using a coupling 20 provided on the outer side of the steel pipes or tubes as illustrated in FIG. 4.

In detail, a male thread portion 12a is formed at one end of a first steel pipe or tube 10a, and a female thread portion 21 that is screwed to the male thread portion 12a of the first steel pipe or tube 10a is formed at one end of the coupling 20. Moreover, a male thread portion 12b is formed at one end of a second steel pipe or tube 10b, and a female thread portion 21 that is screwed to the male thread portion 12b of the second steel pipe or tube 10b is formed at the other end of the coupling 20. The male thread portion 12a of the first steel pipe or tube 10a and the female thread portion 21 at one end of the coupling 20 are screwed together and the male thread portion 12b of the second steel pipe or tube 10b and the female thread portion 21 at the other end of the coupling 20 are screwed together to connect the first steel pipe or tube 10a and the second steel pipe or tube 10b through the coupling 20.

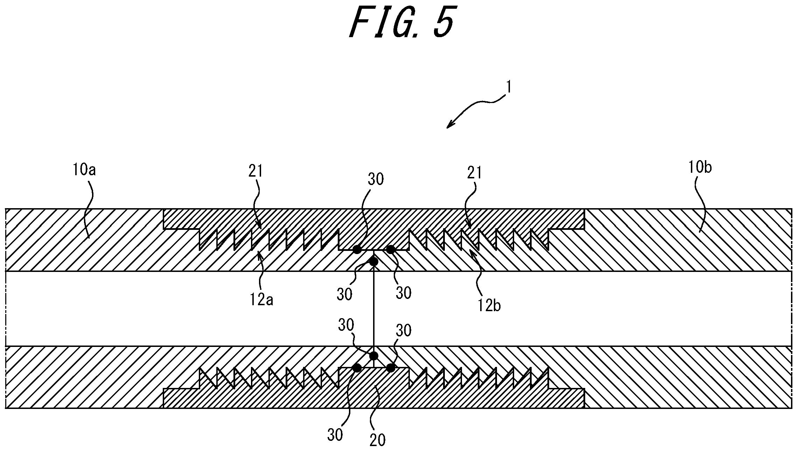

Moreover, it is preferable to provide an O-ring 30 as a sealing member between the coupling 20 and each steel pipe or tube 10 as illustrated in FIG. 5. In particular, an O-ring is provided not only between the first steel pipe or tube 10a and the coupling 20 and between the second steel pipe or tube 10b and the coupling 20 but also between the first steel pipe or tube 10a and the second steel pipe or tube 10b (contact portion) in the example illustrated in FIG. 5.

Although the inner diameter of the coupling 20 and the inner diameter of each steel pipe or tube 10 are the same in the example illustrated in FIGS. 4 and 5, the inner diameter of the coupling 20 and the inner diameter of each steel pipe or tube 10 may be different. Although the first steel pipe or tube 10a and the second steel pipe or tube 10b are in contact with each other in the example illustrated in FIGS. 4 and 5, the first steel pipe or tube 10a and the second steel pipe or tube 10b may be apart from each other as described in Embodiment 4 below.

### (Embodiment 4)

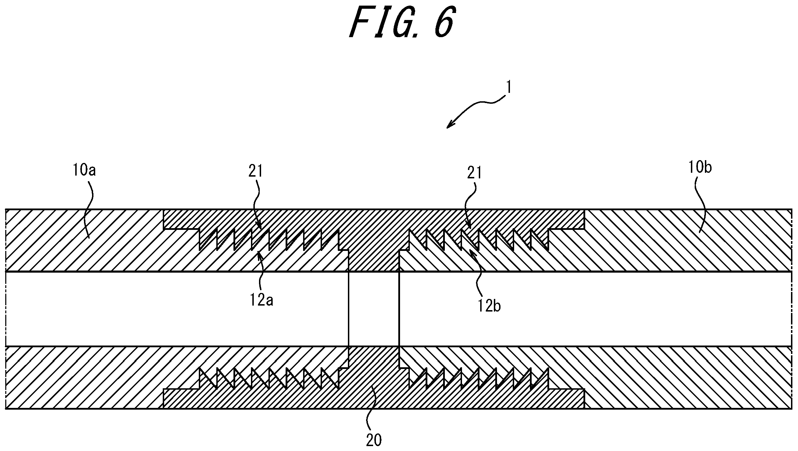

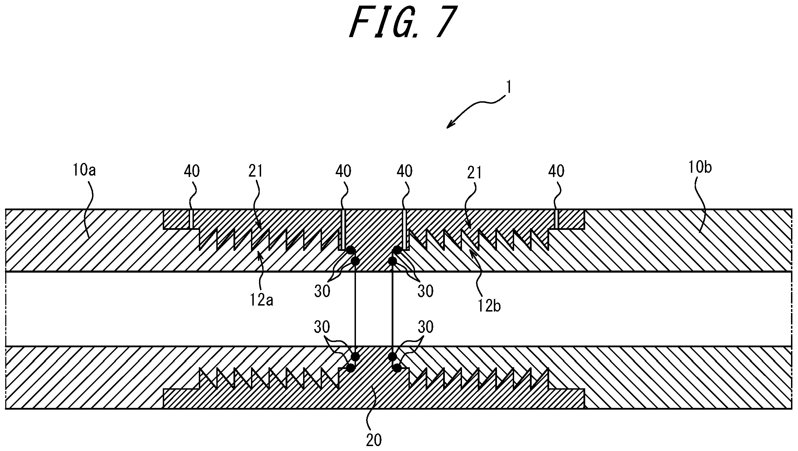

FIG. 6 is a schematic sectional view illustrating the structure of a connecting portion of a pressure vessel 1 for high-pressure hydrogen gas in Embodiment 4 of the present disclosure. In a steel container in this embodiment, adjacent steel pipes or tubes are connected using a coupling 20 provided on the outer side of the steel pipes or tubes, as in Embodiment 3. In this embodiment, however, the tip of the first steel pipe or tube 10a and the tip of the second steel pipe or tube 10b are not in direct contact with each other, whereas the tip of the first steel pipe or tube 10a and the tip of the second steel pipe or tube 10b are in contact with each other in Embodiment 3. The other structures may be the same as those in Embodiment 3. For example, it is preferable to provide an O-ring 30 as a sealing member between the coupling 20 and each steel pipe or tube 10 as illustrated in FIG. 7.

Moreover, it is preferable to install at least one leak port for hydrogen leakage detection. Placing a hydrogen detector beyond the leak port makes it possible to detect leakage of hydrogen gas. The installation position of the leak port is not limited, but the leak port is preferably installed between the end of the coupling and the thread ridge closest to the end and/or between the sealing member and the thread ridge closest to the sealing member. FIG. 7 illustrates an example of the arrangement in the case where a leak port 40 is provided. A hydrogen detector (not illustrated) or the like can be connected to the leak port 40.

A leak port may also be provided in the case where the steel pipes or tubes are directly connected to each other by screw threads as illustrated in FIG. 1 and in the case where a coupling provided on the inner side of the steel pipes or tubes is used as illustrated in FIGS. 2 and 3. In such cases, however, the leak port needs to be provided in the steel pipes or tubes. In the case where a coupling provided on the outer side of the steel pipes or tubes is used as illustrated in FIG. 7, on the other hand, the leak port can be provided in the coupling, so that production is easier.

It is also preferable to, after thread fastening, apply a pressure that is at least 1.5 times the working pressure to apply compressive residual stress to the thread bottom, regardless of the structure of the connecting portion. Applying compressive residual stress can increase the number of times the steel container can be used.

It is also preferable to perform anti-corrosion treatment such as coating on the surface, from the viewpoint of corrosion prevention. It is also preferable to install a support stand near the thread joint to reduce excessive stress on the joint.

### EXAMPLES

In order to determine the effects according to the present disclosure, steel containers were each produced using a plurality of steel pipes or tubes and their performance was evaluated.

Specifically, first, two steel pipes or tubes of each of the materials, types, and dimensions shown in Table 1 were produced, and joined by the corresponding joining method shown in Table 1 to form a steel container. The symbols of the materials of steel pipes or tubes shown in Table 1 denote the following steel types.
a: X52
b: SCM435
c: SNCN439
d: X65

The symbols A to F of the joining methods shown in Table 1 denote the following structures. Here, the structures A to E are respectively as illustrated in FIGS. 1 to 5. As the O-rings, resin O-rings were used.
A: direct thread joining
B: inner coupling (without O-ring)
C: inner coupling (with O-ring)
D: outer coupling (without O-ring)
E: outer coupling (with O-ring)
F: welding

Both ends of the container were sealed with 110 mm thick lids having the same thread shape as the joint. In each example, the material of the lids was SNCM439 steel with a tensile strength (TS) of 900 MPa class, and the SNCM439 steel was forged into the lid shape. Hydrogen gas was introduced through piping connected to a hole made in the center of the lid. The lid may have a structure including an unthreaded lid and a threaded member that supports the unthreaded lid.

Of the materials used, SCM435 and SNCM439 steels were adjusted to 800 MPa to 900 MPa in TS by quenching and tempering, and X52 and X65 were produced by hot rolling.

For comparison, in No. 7, electric resistance welded steel pipes or tubes were used, and joined together by welding. In No. 8, UOE steel pipes or tubes were joined together by welding. Welding was performed under standard conditions for each steel type. The joints in Nos. 1 to 6 formed by screw threads remained base metal microstructure because no welding was performed, whereas the joints in Nos. 7 to 9 had weld microstructure.

The area fractions of martensite (M), bainite (B), retained austenite (RA), and ferrite in each steel pipe or tube were measured by the foregoing method. The number density of inclusions with an aspect ratio of 2.0 or more and a major axis length of 10 µm or more was also measured by the foregoing method. In the measurement of the area fraction and the number density of inclusions, test pieces collected from a position of the longitudinal center and 1/4 of the wall thickness on the inner side of the steel pipe or tube were used. The measurement results are shown in Table 1.

### (Pressure increase test)

A pressure vessel for high-pressure hydrogen gas was produced using each obtained steel container and actually filled with pure hydrogen, and leakage of hydrogen from the thread joint or the weld was checked. Specifically, hydrogen gas was increased to a certain pressure using a compressor, and enclosed in the pressure vessel for high-pressure hydrogen gas. The pressure vessel for high-pressure hydrogen gas was maintained in this state for 10 minutes, and whether hydrogen gas leaked was tested. The test was repeatedly conducted while increasing the pressure in 5 MPa increments up to a maximum of 50 MPa, and the highest pressure at which no leakage occurred was determined. The evaluation results are shown in Table 1.

### (Toughness)

Using each produced pressure vessel, the toughness of the joint in hydrogen gas was evaluated in accordance with ASTM-E1820. Specifically, three test pieces were collected from the joint (weld metal and heat-affected zone (HAZ) in the case where the steel container was joined by welding) of each pressure vessel so that the direction of each test piece would be L-C direction, and the fracture toughness was measured. The test method may be in accordance with ASTM E1681 or ASTM E399. The test environment was pure hydrogen and 21 MPa. The toughness was evaluated as good in the case where the average value of the fracture toughness values of the three test pieces was more than 52 mPa·m^{1/2}, and evaluated as poor in the case where the average value of the fracture toughness values of the three test pieces was 52 mPa·m^{1/2} or less. The evaluation results are shown in Table 1.

As can be seen from the results shown in Table 1, for each pressure vessel for high-pressure hydrogen gas satisfying the conditions according to the present disclosure, the highest pressure at which no leakage occurred was 15 MPa or more, and the toughness of the joint in hydrogen gas was good. For each pressure vessel joined by welding, the highest pressure at which no leakage occurred was 10 MPa, and the toughness of the joint in hydrogen gas was poor.

Thus, according to the present disclosure, a large-capacity pressure vessel capable of stably storing high-pressure hydrogen gas can be easily produced by connecting steel pipes or tubes that are easy to produce and transport. While each steel container was formed using two steel pipes or tubes in this example, even in the case where three or more steel pipes or tubes are used, the load on each connecting portion is basically the same as long as the pressure is the same. For reference, the number of steel pipes or tubes with the size in each example necessary to produce a pressure vessel capable of storing 1000 kg of hydrogen, which is 10 times the hydrogen storage capacity of a typical hydrogen station (approximately 100 kg), is shown in Table 1.

### [Table 1]

**Table 1**

| No. | Steel pipe or tube | | | | | | | | | | | Joining method | Evaluation results | | Number of steel pipes or tubes necessary to store 1000kg of hydrogen | Remarks |
|---|---|---|---|---|---|---|---|---|---|---|---|---|---|---|---|---|
| | Material | Type | Size | | | Area fraction of each microstructure * 1 | | | | | Number density of inclusions *2 (/mm²) | | Highest pressure at which no leakage occurred (MPa) | Toughness of joint material in hydrogen gas environment | | |
| | | | Wall thickness (mm) | Outer diameter (mm) | Length (mm) | M (%) | B (%) | RA (%) | F (%) | Others (%) | | | | | | |
| 1 | a | Seamless | 35 | 350 | 9000 | 0 | 84 | 1 | 4 | 11 | 0 | A | 15 | Good | 140 | Example |
| 2 | b | Seamless | 30 | 400 | 6000 | 85 | 12 | 0 | 0 | 3 | 0 | B | 25 | Good | 90 | Example |
| 3 | b | Seamless | 35 | 400 | 5000 | 92 | 8 | 0 | 0 | 0 | 2 | C | 50MPa or more | Good | 60 | Example |
| 4 | c | Seamless | 40 | 460 | 6000 | 100 | 0 | 0 | 0 | 0 | 0 | D | 30 | Good | 60 | Example |
| 5 | c | Seamless | 40 | 420 | 7000 | 100 | 0 | 0 | 0 | 0 | 0 | E | 50MPa or more | Good | 45 | Example |
| 6 | d | Seamless | 25 | 300 | 8000 | 5 | 92 | 0 | 3 | 0 | 0 | E | 50MPa or more | Good | 60 | Example |
| 7 | b | Electric resistance welded pipe or tube | 30 | 360 | 12000 | 0 | 90 | 3 | 0 | 7 | 5 | F | 10 | Poor | 135 | Comparative Example |
| 8 | a | UOE | 20 | 560 | 12000 | 0 | 90 | 2 | 4 | 4 | 7 | F | 10 | Poor | 45 | Comparative Example |
| 9 | a | Seamless | 35 | 350 | 9000 | 0 | 90 | 2 | 2 | 6 | 0 | F | 10 | Poor | 203 | Comparative Example |

| | | | | | | | | | | | | | | | | |
|---|---|---|---|---|---|---|---|---|---|---|---|---|---|---|---|---|
| *1 M: martensite, B: bainite, RA: retained austenite, F: ferrite *2 Number density of inclusions with aspect ratio of 2.0 or more and major axis length of 10µm or more | | | | | | | | | | | | | | | | |

### REFERENCE SIGNS LIST

- 1: pressure vessel for high-pressure hydrogen gas
- 10: steel pipe or tube
- (10a: first steel pipe or tube)
- (10b: second steel pipe or tube)
- 11: female thread portion
- 12: male thread portion
- 20: coupling
- 21: female thread portion
- 22: male thread portion
- 30: O-ring
- 40: leak port
- 50: lid

## Claims

1. A pressure vessel for high-pressure hydrogen gas, comprising
a steel container that is composed of two or more steel pipes or tubes connected by screw threads.

2. The pressure vessel for high-pressure hydrogen gas according to claim 1, wherein the connection by the screw threads is made using a coupling provided on an inner side of the steel pipes or tubes.

3. The pressure vessel for high-pressure hydrogen gas according to claim 1, wherein the connection by the screw threads is made using a coupling provided on an outer side of the steel pipes or tubes.

4. The pressure vessel for high-pressure hydrogen gas according to any one of claims 1 to 3, wherein a sealing member is provided at a connecting portion between the two or more steel pipes or tubes.

5. The pressure vessel for high-pressure hydrogen gas according to any one of claims 1 to 4, wherein the steel pipes or tubes have a chemical composition containing, in mass%,
C: 0.005 % to 0.60 %,
Si: 0.001 % to 2.0 %,
Mn: 0.01 % to 5.0 %,
P: 0.0001 % to 0.060 %,
S: 0.00001 % to 0.010 %,
N: 0.00001 % to 0.010 %,
Al: 0.0001 % to 1.00 %,
O: 0.010 % or less, and
H: 0 % to 0.0010 %,
with a balance consisting of Fe and inevitable impurities.

6. The pressure vessel for high-pressure hydrogen gas according to claim 5, wherein the chemical composition further contains, in mass%, at least one selected from the group consisting of
Mo: 0.0001 % to 5.0 %,
Cr: 0.0001 % to 5.0 %,
Ni: 0.0001 % to 5.0 %,
Cu: 0.0001 % to 5.0 %,
Co: 0.0001 % to 5.0 %,
B: 0.0001 % to 0.01 %,
V: 0.0001 % to 1.0 %,
W: 0.0001 % to 5.0 %,
Nb: 0.0001 % to 0.1 %,
Ti: 0.0001 % to 0.1 %,
Zr: 0.0001 % to 0.2 %,
Hf: 0.0001 % to 0.2 %,
Ta: 0.0001 % to 0.2 %,
Sb: 0.0001 % to 0.2 %,
Sn: 0.0001 % to 0.2 %,
Ca: 0.0001 % to 0.01 %,
Mg: 0.0001 % to 0.01 %, and
REM: 0.0001 % to 0.5 %.

7. The pressure vessel for high-pressure hydrogen gas according to claim 5 or 6, wherein the steel pipes or tubes have a microstructure in which an area fraction of retained austenite is 0 % to 3 % and a number density of inclusions with an aspect ratio of 2.0 or more and a major axis length of 10 µm or more is 10 or less per 100 mm².
